# EUROPÄISCHE PATENTSCHRIFT

(11) **EP 1 405 100 B1**
(45) Veröffentlichungstag und Bekanntmachung des Hinweises auf die Patenterteilung: **24.09.2008**
(21) Anmeldenummer: 02751031.2
(22) Anmeldetag: 14.06.2002
(51) Int. Cl.: G01S 17/89

(54) **KORREKTURVERFAHREN FÜR DATEN MEHRERER OPTOELEKTRONISCHER SENSOREN**
METHOD FOR CORRECTING DATA OF SEVERAL OPTO-ELECTRONIC SENSORS
PROCEDE DE CORRECTION DE DONNEES RELATIVES A PLUSIEURS CAPTEURS OPTOELECTRONIQUES

(30) Priorität: 15.06.2001 DE 10128954; 04.07.2001 DE 10132335; 28.09.2001 DE 10148062; 08.11.2001 DE 10154861
(43) Veröffentlichungstag der Anmeldung: 07.04.2004
(73) Patentinhaber: IBEO Automobile Sensor GmbH, 22179 Hamburg (DE)
(72) Erfinder: LAGES, Ulrich, 21031 Hamburg (DE); WILLHOEFT, Volker, 22303 Hamburg (DE); DITTMER, Martin, 21271 Hamburg (DE)
(74) Vertreter: Manitz, Finsterwald & Partner GbR
(86) Internationale Anmeldenummer: PCT/EP2002/006594
(87) Internationale Veröffentlichungsnummer: WO 2003/001241

(56) Entgegenhaltungen:
- US-A- 5 808 728
- US-A- 6 100 517
- BECKER J.C.: 'Fusion of heterogeneous Sensors for the Guidance of an autonomous vehicle' PROCEEDINGS OF THE THIRD INTERNAT. CONF. ON INFORMATION FUSION 10 Juli 2000 - 13 Juli 2000, PARIS, FRANCE, Seiten 11 - 18
- HALL L.D.; LLINAS J.: 'AN INTRODUCTION TO MULTISENSOR DATA FUSION' PROCEEDINGS OF THE IEEE, IEEE. Januar 1997, NEW YORK, US, Seiten 6 - 23, XP000686448
- FÜRSTENBERG K. ET AL: 'New Sensor for 360° Vehicle Surveillance. - Innovative Approach to Stop & Go, Lane Assistance and Pedestrian Recognition' PROCEEDINGS OF IV 2001, IEEE INTELLIGENT VEHICLE SYMPOSIUM Mai 2001, TOKYO, JAPAN, Seiten 1 - 5
- BLACKMAN S. ET AL: 'Design and Analysis of Modern Tracking Systems', 1999, ARTECH HOUSE * Seite 661 - Seite 681 *

## Beschreibung

Die vorliegende Erfindung betrifft ein Verfahren zur Bereitstellung korrigierter Daten zur Erzeugung eines Modells eines Überwachungsbereichs, der in jeweiligen Sichtbereichen von mindestens zwei optoelektronischen Sensoren, insbesondere Laserscannern, zur Bestimmung der Lage von erfassten Gegenständen enthalten ist, ein entsprechendes Verfahren zur Erzeugung eines entsprechenden Modells sowie eine Vorrichtung zur Durchführung des Verfahrens.

Optoelektronische Sensoren zur Bestimmung der Lage von von ihnen erfassten Gegenständen, insbesondere Laserscanner zur Lageerfassung, sind grundsätzlich bekannt. Sie werden unter anderem dazu verwendet, unter Anwendung entsprechender Verfahren zur Weiterverarbeitung der von dem Sensor erfassten Daten ein Modell ihres Sichtbereichs zu erzeugen, das eine Basis für weitere Verfahren zum Beispiel zur Steuerung von Vorrichtungen in dem Sichtbereich oder in der Nähe des Sichtbereichs des Sensors bilden kann.

Ein Laserscanner, der winkelaufgelöst die Umgebung abtastet, erfasst dabei zum Beispiel, ob bei einem bestimmten Winkel ein vom ihm ausgesandter Laserlichtstrahl von einem Punkt eines Gegenstands reflektiert wird und, falls dies der Fall ist, aus welcher Entfernung der Strahl reflektiert wurde. Damit wird eine Menge von Datenpunkten in Form von Polarkoordinaten erhalten, die die Lage von erfassten Gegenstandspunkten charakterisieren. Häufig wird auf der Basis der von dem Sensor ausgegebenen Daten über die Lage einzelner erfasster Gegenstandspunkte eine Objekterkennung und Objektverfolgung durchgeführt, um Gegenstände in dem Sichtbereich des Sensors als Ansammlung von Gegenstandspunkten zu erkennen, wobei erkannte Objekte in dem Modell entsprechenden Gegenständen im Sichtbereich des Sensors zugeordnet sind. Die Objektinformationen des Modells werden dann bei nachfolgenden Verfahren verwendet.

Solche Sensoren können, zum Beispiel in Fahrzeugen aber auch in stationären Einrichtungen, dazu benutzt werden, einen Überwachungsbereich, zum Beispiel vor dem Fahrzeug, zu beobachten. Zur Erweiterung des beobachteten Bereichs können dabei mindestens zwei Sensoren verwendet werden, deren Sichtbereiche sich in der Regel überschneiden. Befinden sich von den Sensoren erfasste Objekte im Überschneidungsbereich, werden an die nachfolgenden Verfahren von den Sensoren jeweils unterschiedliche Objektinformationen in Bezug auf den gleichen Gegenstand weitergegeben. Da in dem Modell der erfassten Umgebung einem Gegenstand nur ein Objekt zugeordnet sein sollte, muss das Verfahren dann eine sogenannte Objektfusion durchführen. Dabei werden unterschiedliche Objekte der einzelnen Sensoren, die einem Gegenstand entsprechen, zu einem neuen Objekt zusammengeführt.

Bei einigen Verfahren erfolgt diese Objektfusion allein aufgrund der Objektdaten. Dies hat jedoch den Nachteil, dass hierbei nur eine - bezogen auf den Aufwand - geringe Genauigkeit des Modells nach der Objektfusion gegeben ist. Dies ist insbesondere dann der Fall, wenn die Gegenstände sich relativ zu den Sensoren bewegen. Ein derartiges Verfahren wird in der Veröffentlichung von Jan C. Becker, "Fusion of Heterogeneous Sensors for the Guidance of an Autonomous Vehicle", Proceedings of the Third International Conference on Information Fusion, 2000, Paris, France, pp. WeD5 - 11 beschrieben.

In den folgenden Veröffentlichungen wird Rohdatenfusion beschrieben:
- FÜRSTENBERG, K. ET AL: "New Sensor for 360° Vehicle Surveillance. - Innovative Approach to Stop & Go, Lane Assistance and Pedestrian Recognition" PROCEEDINGS OF IV 2001, IEEE INTELLIGENT VEHICLE SYMPOSIUM, Mai 2001 (2001-05), Seiten 1-5, Tokyo, Japan;
- HALL L D; LLINAS J: "AN INTRODUCTION TO MULTISENSOR DATA FUSION" PROCEEDINGS OF THE IEEE, IEEE., Januar 1997 (1997-01), Seiten 6-23, XP000686448 NEW YORK, US, und
- BLACKMAN, S. ET AL: "Design and Analysis of Modern Tracking Systems" 1999, ARTECH HOUSE

Es ist Aufgabe der Erfindung, ein Verfahren sowie eine Vorrichtung bereitzustellen, welches die Erzeugung eines Modells eines Überwachungsbereichs im Sichtbereich von mindestens zwei optoelektronischen Sensoren zur Lagebestimmung von Gegenständen mit hoher Genauigkeit gestattet.

Die Aufgabe wird gelöst durch ein Verfahren mit den Merkmalen des Anspruchs 1.

Das erfindungsgemäße Verfahren stellt zur Erzeugung eines Modells eines Überwachungsbereichs, der in jeweiligen Sichtbereichen von mindestens zwei optoelektronischen Sensoren, insbesondere Laserscannern, zur Bestimmung der Lage von erfassten Gegenständen liegt und Gegenstandspunkte enthält, korrigierte Daten der Sensoren bereit, die die Basis für eine einheitliche Objekterkennung und/oder -verfolgung darstellen können.

Der Überwachungsbereich liegt innerhalb der Sichtbereiche der einzelnen Sensoren, die sich zwar in der Regel überschneiden werden, dies jedoch nicht unbedingt müssen. Der Überwachungsbereich im Sinne der Erfindung kann auch durch eine der Anzahl der Sensoren entsprechende Anzahl sich nicht berührender und/oder sich nicht überschneidender Sichtbereiche gegeben sein.

Bei den optoelektronischen Sensoren kann es sich im Prinzip um beliebige Sensoren handeln, mittels derer die Lage einzelner Punkte eines Gegenstands erfassbar ist, insbesondere um entsprechende Laserscanner.

Die Bereitstellung korrigierter Daten erfolgt auf der Basis von Mengen von Rohdatenelementen, die Gegenstandspunkten in dem Überwachungsbereich entsprechen. Die Rohdatenelemente einer Menge werden jeweils von einem der Sensoren bei einer Abtastung des Sichtbereichs erfasst, so dass diese Menge dem entsprechenden Sensor zugeordnet ist. Die Rohdatenelemente umfassen zumindest die Lage, das heißt die Koordinaten, von Gegenstandspunkten, die von dem zugeordneten Sensor erfasst wurden. Bei diesen Koordinaten kann es sich um Koordinaten in beliebigen Koordinatensystemen wie zum Beispiel kartesischen, Polar- oder Kugelkoordinatensystemen handeln. Werden, wie zum Beispiel in der Regel bei Laserscannern der Fall, die Abstände von Reflexionen bei aufeinanderfolgenden, durch einen fortlaufenden Index gekennzeichneten Abtastwinkeln mit festen Inkrementen als Lagekoordinaten erfasst, so können als Koordinaten auch nur die Indizes und die Abstände verwendet werden, wobei die Winkelinkremente bekannt sind.

Die Mengen von Rohdatenelementen verschiedener Sensoren mit einer bestimmten zeitlichen Zuordnung zueinander bilden eine Gruppe, die einer Gesamtabtastung durch alle Sensoren entspricht. Von Bedeutung ist nur eine zeitliche Zuordnung überhaupt, nicht aber eine vollständige Synchronität der Abtastvorgänge. Die zeitliche Zuordnung kann zum Beispiel dadurch gegeben sein, dass alle Abtastungen innerhalb eines bestimmten Zeitintervalls begonnen und abgeschlossen werden und insbesondere dadurch, dass sich die den jeweiligen Mengen entsprechenden Abtastungen zeitlich überschneiden.

Zur Bildung von korrigierten Mengen korrigierter Datenelemente, die den Mengen von Rohdatenelementen der Gruppe entsprechen, werden für jede Menge der Gruppe die in den Rohdatenelementen enthaltenen Koordinaten unter Berücksichtigung der Relativlage der jeweiligen Sensoren in ein gemeinsames Koordinatensystem transformiert.

Wenn die Koordinaten der Rohdatenelemente verschiedener Sensoren nicht vom gleichen Typ sind, kann bei der Transformation zunächst eine Transformation in ein Koordinatensystem gleichen Typs erfolgen. Entsprechend der als bekannt vorausgesetzten Lage der Sensoren relativ zueinander können die Koordinaten gleichen Typs durch entsprechende Verschiebung in ein gemeinsames Koordinatensystem mit einem gemeinsamen, das heißt für alle Sensoren gleichen Koordinatenursprung transformiert werden.

Die Mengen von Rohdatenelementen können vor der Transformation eingelesen werden, doch kann die Transformation der Rohdatenelemente eines Sensors auch bereits erfolgen, bevor das Einlesen der Rohdatenelemente dieses oder eines anderen Sensors beendet ist, da die Transformation für jedes Rohdatenelement unabhängig erfolgen kann. Sind in einem oder mehreren der Sensoren eine oder mehrere Auswerteeinrichtungen vorgesehen, mittels derer das Verfahren durchgeführt werden kann, kann auch direkt auf die Rohdatenelemente in einem Speicher der Auswerteeinrichtung zugegriffen werden, die entsprechend sonstiger Funktionen der Auswerteeinheit dort gespeichert sind.

Die korrigierten Datenelemente können, je nach Art der Weiterverarbeitung, ausgegeben, gespeichert oder direkt weiterverarbeitet werden.

Insbesondere ermöglicht es das erfindungsgemäße Verfahren, auf der Gesamtmenge der korrigierten Datenelemente dann eine, zum Beispiel konventionelle, Objekterkennung und/oder -verfolgung durchzuführen.

Dies hat den Vorteil, dass eine Objekterkennung und/oder -verfolgung im Überschneidungsbereich der Sensoren für einen Gegenstand auf der Basis einer größeren Anzahl von dem gleichen Gegenstandspunkt zugeordneten korrigierten Datenelementen erfolgen kann, was die Genauigkeit wesentlich erhöht. Weiterhin können für den gleichen Gegenstand korrigierte Daten aus den verschiedenen Perspektiven der Sensoren zusammengeführt werden, was zum einen die Objekterkennung durch die so erweiterte Ansicht erleichtert, und zum anderen Komplikationen durch das Zusammenführen von sich nur teilweise überschneidenden Objekten vermeidet, die zu demselben Gegenstand gehören.

Vorteile ergeben sich insbesondere bei Sensoren mit polarer Aufnahmecharakteristik wie zum Beispiel Laserscannern. Auch kleine Gegenstände im Nahbereich können bei solchen Sensoren einen sehr großen Winkelbereich im Sichtbereich verdecken, so dass in diesem Winkelbereich entferntere Gegenstände nicht mehr erfasst werden können. Bei Verwendung von mehreren Sensoren, von denen mindestens einer einen solchen verdeckten, entfernter liegenden Gegenstand erfassen kann, kann durch die erfindungsgemäße Korrektur der Daten zur Erstellung eines Modells des Überwachungsbereichs auch der von nur dem einen Sensor erfasste, für einen anderen Sensor verdeckte Gegenstand erkannt werden.

Darüber hinaus ist der aufwendige Vorgang der Objekterkennung und -verfolgung nur einmal durchzuführen, wodurch das Verfahren bei gleicher Genauigkeit effizienter arbeitet als Verfahren, bei denen die Objekterkennung und/oder -verfolgung für jede Menge von Rohdatenelementen getrennt erfolgt.

Daher ist ein weiterer, die Aufgabe lösender Gegenstand der Erfindung auch ein Verfahren zur Erzeugung eines Modells eines Überwachungsbereichs, der in jeweiligen Sichtbereichen von mindestens zwei optoelektronischen Sensoren, insbesondere Laserscannern, zur Bestimmung der Lage von erfassten Gegenständen liegt und Gegenstandspunkte enthält, bei dem das erfindungsgemäße Verfahren zur Bereitstellung korrigierter Daten durchgeführt wird, und eine Objekterkennung und/oder -verfolgung auf der Basis der Gesamtmenge aller korrigierten Datenelemente erfolgt. Nach Durchführung der Objekterkennung und/oder -verfolgung können die berechneten Objektdaten ausgegeben, gespeichert oder bei nachfolgenden Verfahren verwendet werden.

Bevorzugte Weiterbildungen und Ausführungsformen der Erfindung sind in den Unteransprüchen, der Beschreibung und den Zeichnungen beschrieben.

Die Rohdatenelemente können bevorzugt weitere Informationen wie zum Beispiel die Echoamplitude der Reflexion enthalten, die bei der Objekterkennung verwendet werden können. Solche Daten können, wenn ihr Wert von kinematischen Daten oder dem Zeitpunkt der Erfassung abhängt, im Zuge der Korrektur der Koordinaten mitkorrigiert werden, oder ansonsten unverändert bleiben.

Die Rohdatenelemente der Mengen einer Gruppe werden in der Regel nicht gleichzeitig erfasst, da zum einen die Sensoren ihre Abtastung nicht unbedingt zur gleichen Zeit beginnen (Latenz zwischen Sensoren) und zum anderen bei derselben Abtastung eines Sensors die Rohdatenelemente nur sukzessive erfasst werden (abtastungsinterne Latenz). Bei einer Bewegung der Sensoren, insbesondere einer Relativbewegung, führt dies dazu, dass die Koordinaten von Rohdatenelementen, die zu verschiedenen Zeiten erfassten Gegenstandspunkten entsprechen, entsprechend der Zeitdifferenzen und der Bewegung der Sensoren verschoben sind. Daher werden bevorzugt bei der Bildung der korrigierten Mengen für jede Menge die Koordinaten der Rohdatenelemente jeweils entsprechend der Bewegung des diese erfassenden Sensors und der Differenz zwischen einer als Zeitpunkt der Erfassung der jeweiligen Rohdatenelemente definierten Zeit und einem Bezugszeitpunkt korrigiert.

Damit wird eine Korrektur derart durchgeführt, dass die Koordinaten zumindest näherungsweise die Lage der Gegenstandspunkte zu einem gemeinsamen Bezugszeitpunkt beschreiben. Dazu wird zunächst für jedes Rohdatenelement eine als Zeitpunkt der Erfassung der jeweiligen Rohdatenelemente definierte Zeit festgelegt. Obwohl die Messung der Erfassungszeit jedes Rohdatenelements die genaueste Korrektur ergäbe, kann es aus praktischen Gründen sinnvoll und im Rahmen der erforderlichen Genauigkeit der Korrektur ausreichend sein, wenn eine andere bestimmte, geeignete Zeit als Zeitpunkt der Erfassung definiert wird.

Besonders bevorzugt wird als Zeitpunkt der Erfassung der Rohdatenelemente für alle Rohdatenelemente einer Menge eine als Zeitpunkt der Erfassung der Menge definierte Zeit verwendet. Dies bedeutet, dass allen Rohdatenelementen die gleiche Erfassungszeit zugeordnet wird, wodurch die zeitlichen Verschiebungen der Abtastungen zwischen verschiedenen Sensoren, also die Latenz zwischen den Sensoren, berücksichtigt werden können. Hierbei wird vorteilhaft zum Beispiel die Zeit des Beginns oder des Abschlusses einer Abtastung für den jeweiligen Sensor festgestellt und als Zeitpunkt der Erfassung der Menge verwendet, wobei es grundsätzlich ausreicht, nur die entsprechenden Zeitdifferenzen für jeweils ein Paar von Sensoren zu kennen.

Häufig werden diese Zeitdifferenzen kleiner sein als die Dauer einer Abtastung durch einen Sensor und damit als der zeitliche Abstand der Erfassung verschiedener Rohdatenelemente bei derselben Abtastung durch einen Sensor. Besonders bevorzugt wird daher bei der Festlegung der als Zeitpunkt der Erfassung eines Rohdatenelements definierten Zeit der zeitliche Abstand der Erfassung der einzelnen Rohdatenelemente der Menge zueinander berücksichtigt. Die als Zeitpunkt der Erfassung eines Rohdatenelements definierte Zeit kann sich dann ergeben aus der als Zeitpunkt der Erfassung der Menge definierten Zeit und der zeitlichen Differenz zwischen der Erfassung von Rohdatenelementen während einer Abtastung, die zum Beispiel unter Annahme einer konstanten Abtastgeschwindigkeit aus der Lage des Rohdatenelements in der Reihe zeitlich aufeinanderfolgender Rohdatenelemente abgeleitet werden kann.

Obwohl die Bestimmung der als Zeitpunkt der Erfassung eines Rohdatenelements definierten Zeit absolut erfolgen kann, ist sie nur relativ zu dem Bezugszeitpunkt notwendig, da eine näherungsweise Korrektur nur bezüglich der Bewegung in dem Zeitintervall zwischen Erfassung und Bezugszeitpunkt erfolgen soll. Dieser Bezugszeitpunkt kann, wenn nur die Verschiebungen aufgrund der unterschiedlichen Erfassungszeiten während derselben Abtastung korrigiert werden, für jede Menge unterschiedlich gewählt werden. Bevorzugt wird jedoch ein für die Gruppe von Mengen gleicher Bezugszeitpunkt gewählt. Dieser Bezugszeitpunkt kann grundsätzlich frei gewählt werden, liegt aber vorzugsweise innerhalb des Zeitintervalls vom Beginn der frühesten Abtastung durch einen der Sensoren bis zum Abschluss der letzten Abtastung durch einen der Sensoren, wobei die Abtastungen jeweils Mengen der Gruppe entsprechen. Hierdurch ist zum einen die Näherung für die Korrekturverschiebung genauer, da eine Approximation der zeitlich nicht zwangsläufig konstanten Bewegung innerhalb des Zeitintervalls nur über kürzere Zeiten erfolgt. Zum anderen ist in diesem Fall die Bestimmung der als Zeitpunkt der Erfassung eines Rohdatenelements definierten Zeit wesentlich vereinfacht, insbesondere wenn zum Beispiel der Beginn einer Abtastung durch einen der Sensoren als Bezugszeitpunkt gewählt wird.

Bei der Bewegung der Sensoren, die im erfindungsgemäßen Verfahren verwendet wird, kann es sich um die tatsächliche, reale Bewegung der Sensoren oder eine der tatsächlichen Bewegung angenäherte Bewegung handeln. Die Bewegung der Sensoren kann dabei zum Beispiel je nach Güte der Korrektur über deren Geschwindigkeiten oder auch über deren Geschwindigkeiten und Beschleunigungen berücksichtigt werden, wobei hierbei vektorielle Größen, das heißt Größen mit Betrag und Richtung, gemeint sind. Insbesondere kann, wenn die Sensoren sich relativ zueinander in einer zeitlich konstanten Lage befinden, auch eine Drehbewegung der Anordnung berücksichtigt werden.

Die Daten über diese kinematischen Größen können zum Beispiel eingelesen werden. Bei Fahrzeugen können zum Beispiel über entsprechende Fahrzeugsensoren die Eigengeschwindigkeit des Fahrzeugs und der Lenkwinkel oder die Gierrate verwendet werden, um die Bewegung der Sensoren zu spezifizieren. Diese Bewegung der Sensoren kann dann zum Beispiel allein durch die Bewegung des Fahrzeugs angenähert sein, so dass bei Drehbewegungen allen Sensoren unabhängig von ihrer Anordnung die gleiche Bahngeschwindigkeit zugeordnet wird. In einer besseren Näherung kann zur Berechnung der Bewegung der Sensoren aus den kinematischen Daten eines Fahrzeugs natürlich auch deren Position an dem Fahrzeug berücksichtigt werden.

Die Bewegung der Sensoren bzw. die kinematischen Daten können jedoch auch aus einer entsprechenden parallelen Objekterkennung und/oder -verfolgung in den Sensoren oder einer nachfolgenden Objekterkennung bestimmt werden. Vorzugsweise werden kinematische Daten verwendet, die in zeitlicher Nähe zu den Mengen der Gruppe entsprechenden Abtastungen durch die Sensoren, besonders bevorzugt während der Abtastung durch einen der Sensoren, erfasst werden.

Zur Korrektur können bevorzugt aus den kinematischen Daten der Bewegung und der Zeitdifferenz zwischen einer als Zeitpunkt der Erfassung der jeweiligen Rohdatenelemente definierten Zeit und einem Bezugszeitpunkt der Gruppe oder der Menge mit bekannten kinematischen Formeln die durch die Bewegung innerhalb der Zeitdifferenz verursachten Verschiebungen berechnet und die Koordinaten in den Rohdatenelementen entsprechend korrigiert werden. Grundsätzlich können jedoch auch modifizierte kinematische Beziehungen verwendet werden.

Die Korrekturen können hierbei erfolgen, sobald die kinematischen Daten und die Zeitdifferenzen festgestellt sind. Insbesondere können sie dann für die Sensoren bzw. die zugeordneten Mengen einer Gruppe getrennt oder gemeinsam und dabei jeweils vor, während oder nach der Transformation in ein gemeinsames Koordinatensystem erfolgen.

Werden zwei sich bewegende Gegenstandspunkte aufgrund der Latenz zwischen den Sensoren und/oder aufgrund der abtastungsinternen Latenz nicht gleichzeitig erfasst, so weichen im allgemeinen die aus den Koordinaten der zugehörigen Rohdatenelemente bestimmten Lagen der Gegenstandspunkte und insbesondere ihre Abstände von den tatsächlichen Lagen und Abständen ab. Insbesondere bei schnell bewegten Gegenständen können diese Abweichungen erheblich werden und eine spätere Objekterkennung und/oder -verfolgung nach Korrektur und Zusammenführung der korrigierten Daten gemäß dem oben geschilderten Verfahren erschweren.

Bevorzugt wird daher für jede Menge von Rohdatenelementen der Gruppe vor Bildung der entsprechenden korrigierten Menge eine Objekterkennung und/oder -verfolgung auf der Basis der Rohdatenelemente der Menge durchgeführt, wobei jedem erkannten Objekt Rohdatenelemente und jedem dieser Rohdatenelemente zumindest eine bei der Objektverfolgung berechnete Bewegungsdaten zugeordnet werden. Bei der Bildung der korrigierten Mengen werden dann Ergebnisse der Objekterkennung und/oder -verfolgung auf der Basis der einzelnen Mengen, insbesondere ein Teil der Bewegungsdaten, zur Korrektur verwendet. Durch die Durchführung einer Objekterkennung und/oder -verfolgung für jede Menge, d.h. für jeden Sensor getrennt, und unabhängig von der Bereitstellung korrigierter Daten und einer nachfolgenden Objekterkennung und/oder - verfolgung, ist eine objektbezogene Korrektur von Fehlern der Rohdatenelemente aufgrund der oben beschriebenen zeitlichen Latenzen möglich. Insbesondere können Rohdatenelemente, die schnell bewegten Gegenstandspunkten entsprechen, sehr umfassend im Hinblick auf die Latenzen korrigiert werden, so dass eine Objekterkennung und/ oder -verfolgung auf der Basis der korrigierten Datenelemente einfach und mit hoher Genauigkeit möglich ist.

Bei der Objekterkennung und/oder -verfolgung für jede der Mengen von Rohdatenelementen können bekannte Verfahren benutzt werden, wobei grundsätzlich schon vergleichsweise einfache Verfahren ausreichen. Die Objekterkennung und/oder -verfolgung kann allein anhand der Rohdatenelemente einer Menge erfolgen oder auch nach Transformation auf ein gemeinsames Koordinatensystem.

Bei der geschilderten Weiterbildung des erfindungsgemäßen Verfahrens werden bevorzugt bei der Bildung der korrigierten Mengen für jede Menge die Koordinaten der Rohdatenelemente entsprechend der ihnen zugeordneten Bewegungsdaten und der Differenz zwischen einer als Zeitpunkt der Erfassung der Rohdatenelemente definierten Zeit und einem Bezugszeitpunkt der Gruppe oder Menge korrigiert. Diese Korrektur kann selbstverständlich allein oder zusätzlich zu der oben geschilderten Korrektur der Verschiebungen aufgrund der Sensorbewegung und der zeitlichen Latenzen erfolgen.

Im Hinblick auf die Differenz zwischen einer als Zeitpunkt der Erfassung der Rohdatenelemente definierten Zeit und einem Bezugszeitpunkt der Gruppe oder Menge wird auf die obigen Ausführungen verwiesen, die auch hier entsprechend gelten, wenn die Bewegung des Sensors durch die Bewegung des Objekts ersetzt wird. Insbesondere kann als Bezugszeitpunkt ein für alle Mengen der Gruppe gleicher Bezugszeitpunkt gewählt werden.

Bei den Bewegungsdaten kann es sich um beliebige kinematische Daten eines Objekts handeln, bevorzugt zum Beispiel je nach erforderlicher Güte der Korrektur um dessen Geschwindigkeit oder auch um dessen Geschwindigkeit und Beschleunigung, wobei hierunter wiederum vektorielle Größen, das heißt Größen mit Betrag und Richtung, verstanden werden. Dabei können die Bewegungsdaten, die den einem Objekt zugeordneten Rohdatenelementen zugeordnet sind, gleich gewählt werden, insbesondere gleich den Bewegungsdaten des Objekts. Dies ist insbesondere dann sinnvoll, wenn die Bewegungsdaten nur die Geschwindigkeit des Objekts umfassen, da dann allen das Objekt bildenden Rohdatenelemente konsistenterweise die gleichen Geschwindigkeiten zuzuordnen sind. Den Rohdatenelementen, die einem Objekt zugeordnet sind, können jedoch auch einzeln Bewegungsdaten zugeordnet werden, was insbesondere dann sinnvoll ist, wenn die Bewegungsdaten des Objekts auch mögliche Drehbewegungen des Objekts umfassen, da dann die einzelnen Objektpunkte unterschiedliche Momentangeschwindigkeiten aufweisen. Hierdurch ist eine besonders weitgehende Korrektur der durch die zeitlichen Latenzen verursachten Fehler in den Rohdatenelementen bei sich vergleichsweise schnell drehenden Gegenständen, beispielsweise Fahrzeugen mit hohen Gierraten, gegeben.

Wie bei dem oben geschilderten Verfahren kann die Korrektur anhand entsprechender kinematischer Beziehungen zwischen Verschiebung, Bewegungsgrößen und Zeitdauer der Bewegung erfolgen, wobei auch hier Modifikationen möglich sind.

Bei den oben geschilderten Verfahren zur Korrektur von Fehlern in den Rohdatenelementen, die durch die zeitlichen Latenzen zwischen Sensoren und durch die abtastungsinternen Latenzen verursacht werden, liegt bevorzugt der Bezugszeitpunkt zwischen der frühesten als Erfassungszeit definierten Zeit eines Rohdatenelements einer der Mengen der Gruppe und der zeitlich letzten als Erfassungszeit definierten Zeit eines Rohdatenelements einer der Mengen der Gruppe liegt. Dadurch können die Fehler bei der Berechnung der Korrekturverschiebung insbesondere bei schnellen Änderungen der Bewegungsdaten reduziert werden.

Bei einer weiteren Ausführungsform des erfindungsgemäßen Verfahrens, bei dem die Ergebnisse einer Objekterkennung und/oder -verfolgung auf der Basis der einzelnen Mengen, insbesondere eines Teil der Bewegungsdaten, zur Korrektur verwendet werden, werden mehrere Bezugszeitpunkte verwendet, die jeweils einer einem Gegenstand entsprechenden Objektgruppe zugeordnet sind.

Vor oder bei Bildung der Mengen korrigierter Datenelemente werden dazu jeweils einem Gegenstand zugeordnete Objektgruppen mit Objekten, die auf der Basis jeweils einer Menge von Rohdatenelementen erstellt wurden und als einem Gegenstand entsprechend erkannt werden, gebildet. Hierzu können zum Beispiel Verfahren zur Objekterkennung und/oder - verfolgung angewendet werden oder, wenn ein Objekt im Sichtbereich eines ersten Sensors in den Sichtbereich eines zweiten Sensors eintritt, Verfahren zur entsprechenden Extrapolation von Daten aus dem Sichtbereich des ersten Sensors. Weiterhin werden für jede einem Gegenstand zugeordnete Objektgruppe die zugehörigen Rohdatenelemente in jeder Menge gesucht. Außerdem wird für jede Objektgruppe ein dieser zugeordneter Bezugszeitpunkt festgelegt. Bei der Bildung der Mengen korrigierter Datenelemente werden dann für jedes Objekt der einem Gegenstand zugeordneten Objektgruppe die Koordinaten der ihm zugeordneten Rohdatenelemente in allen Mengen von Rohdatenelementen der Gruppe entsprechend der Bewegung des diese Rohdatenelemente erfassenden Sensors und/oder der diesen Rohdatenelementen zugeordneten Bewegungsdaten und der Differenz zwischen einer als Zeitpunkt der Erfassung des Rohdatenelements definierten Zeit und dem Bezugszeitpunkt der Objektgruppe korrigiert.

Bei den Bewegungsdaten kann es sich um beliebige kinematische Daten eines Sensors bzw. eines Objekts handeln, bevorzugt zum Beispiel je nach erforderlicher Güte der Korrektur um deren Geschwindigkeiten oder auch um deren Geschwindigkeiten und Beschleunigungen, wobei hierunter wiederum vektorielle Größen, das heißt Größen mit Betrag und Richtung, verstanden werden. Dabei können die Bewegungsdaten, die den einem Objekt zugeordneten Rohdatenelementen zugeordnet sind, gleich gewählt werden, insbesondere gleich den Bewegungsdaten des Objekts. Dies ist insbesondere dann sinnvoll, wenn die Bewegungsdaten nur die Geschwindigkeit des Objekts umfassen, da dann allen das Objekt bildenden Rohdatenelementen konsistenterweise die gleiche Geschwindigkeit zuzuordnen ist. Den Rohdatenelementen, die einem Objekt zugeordnet sind, können jedoch auch einzeln Bewegungsdaten zugeordnet werden, was insbesondere dann sinnvoll ist, wenn die Bewegungsdaten des Objekts auch mögliche Drehbewegungen des Objekts umfassen, da dann die einzelnen Objektpunkte unterschiedliche Momentangeschwindigkeiten aufweisen. Hierdurch ist eine besonders weitgehende Korrektur der durch die zeitlichen Latenzen verursachten Fehler in den Rohdatenelementen bei sich vergleichsweise schnell drehenden Gegenständen, beispielsweise Fahrzeugen mit hohen Gierraten, gegeben.

Wie bei dem oben geschilderten Verfahren kann die Korrektur anhand entsprechender kinematischer Beziehungen zwischen Verschiebung, Bewegungsgrößen und Zeitdauer der Bewegung erfolgen, wobei auch hier Modifikationen möglich sind.

Dabei wird im Hinblick auf die Differenz zwischen einer als Zeitpunkt der Erfassung der Rohdatenelemente definierten Zeit und einem Bezugszeitpunkt der Gruppe oder Menge auf die obigen Ausführungen verwiesen, die auch hier entsprechend gelten. Abweichend davon wird hier jedoch für jede einem Gegenstand zugeordnete Objektgruppe einzeln ein Bezugszeitpunkt gewählt, der bevorzugt nahe an dem Zeitpunkt einer Messung eines zugeordneten Rohdatenelements liegt.

Bevorzugt liegen die den Objektgruppen jeweils zugeordneten Bezugszeitpunkte zwischen der frühesten als Zeitpunkt der Erfassung definierten Zeit eines einem der Objekte der jeweiligen Objektgruppe zugeordneten Rohdatenelements und der zeitlich letzten als Zeitpunkt der Erfassung definierten Zeit eines einem Objekt der jeweiligen Objektgruppe zugeordneten Rohdatenelements, da hierdurch die Genauigkeit der Korrektur steigt. Dies ist insbesondere bei beschleunigten Gegenständen bzw. entsprechenden Objekten von Bedeutung, da deren Bewegungsdaten sich während der tatsächlichen Erfassungszeit der entsprechenden Rohdatenelemente und dem Bezugszeitpunkt stark ändern können. Besonders bevorzugt ist mindesten ein einer Objektgruppe zugeordneter Bezugszeitpunkt der Erfassungszeitpunkt eines einem Objekt dieser Objektgruppe zugeordneten Rohdatenelements, da hierdurch die Genauigkeit der Korrektur weiter gesteigert wird.

Besonders bevorzugt enthalten die korrigierten Datenelemente für eine Objektgruppe auch den dieser Objektgruppe zugeordneten Bezugszeitpunkt, so dass dieser bei einer nachfolgenden Objekterkennung und/oder -verfolgung berücksichtigt werden kann. Jeder Objektgruppe kommt daher gewissermaßen ein eigenes "Alter" zu.

Bei den zuvor geschilderten Verfahren nach anderen Ausführungsformen dagegen wird den korrigierten Datenelementen insgesamt eine gemeinsame Bezugszeit zugeordnet, bezüglich welcher die Rohdatenelemente korrigiert sind. Die Gesamtmenge der korrigierten Datenelemente kann bei diesen anderen Ausführungsformen daher als einer Abtastung des Gesamtbereichs entsprechend angesehen werden. Bei der zuletzt beschriebenen Ausführungsform dagegen werden jeweils einer Objektgruppe entsprechend korrigierte Datenelemente bereitgestellt, was jeweils gewissermaßen als objektgruppenbezogene Abtastung angesehen werden kann.

Bei dem erfindungsgemäßen Verfahren zur Erzeugung eines Modells eines Überwachungsbereichs wird daher bei einer bevorzugten Ausführungsform für jede Objektgruppe auf der Basis der dieser zugeordneten korrigierten Datenelemente eine Objekterkennung und/oder -verfolgung getrennt durchgeführt, wozu gegebenenfalls die zugeordneten Bezugszeitpunkte berücksichtigt werden.

Die entsprechende Objekterkennung und/oder -verfolgung kann dabei unmittelbar nach Bildung der Objektgruppe und Korrektur der Rohdatenelemente erfolgen oder erst nach Bereitstellung aller korrigierten Datenelemente, wobei die Information darüber, welche korrigierten Datenelemente einer Objektgruppe zugeordnet sind, in den korrigierten Datenelementen enthalten sein kann.

Ein solches Verfahren führt auch bei bewegten Sensoren und schnell bewegten Gegenständen zu sehr guten Ergebnissen.

Die oben geschilderten Ausführungsformen des Verfahrens, bei denen jeweils auf jede Menge von Rohdatenelementen getrennt eine Objekterkennung und/oder -verfolgung angewendet wird, können vollständig auf einer Datenverarbeitungseinrichtung durchgeführt werden. Bevorzugt werden jedoch die Objekterkennung und/oder -verfolgung auf der Basis der Rohdatenelemente einer Menge in einer Auswerteeinheit des diese Rohdatenelemente der Menge erfassenden Sensors und die anderen Schritte in einer separaten Datenverarbeitungseinrichtung durchgeführt. Dadurch wird zum einen ein Teil der Datenverarbeitung auf die Sensoren verlagert. Zum anderen weisen viele bekannte Sensoren, insbesondere Laserscanner, die in Verbindung mit dem erfindungsgemäßen Verfahren einsetzbar sind, eine geeignete Auswerteeinheit bereits serienmäßig auf.

Bevorzugt wird das erfindungsgemäße Verfahren iterativ für jeweils zeitlich aufeinanderfolgende Abtastungen der Sensoren durchgeführt, wobei nach Einlesen mindestens einer einem der Sensoren zugeordneten Menge von Rohdatenelementen, die bei einer späteren Abtastung erfasst wurden als die Rohdatenelemente der bisher in der Gruppe von Mengen von Rohdatenelementen enthaltenen, dem Sensor zugeordneten Menge von Rohdatenelementen, eine neue Gruppe gebildet wird. Diese neue Gruppe enthält die anderen Sensoren zugeordneten Mengen von Rohdatenelementen der bisherigen Gruppe sowie die mindestens eine neue Menge von Rohdatenelementen. Anschließend wird das erfindungsgemäße Verfahren auch für die neue Gruppe von Mengen von Rohdatenelementen durchgeführt, wobei gegebenenfalls bereits bei der vorhergehenden Iteration erhaltene Daten verwendet werden, das heißt nicht neu berechnet werden.

Hierdurch werden bei der Verwendung mehrerer Sensoren öfter korrigierte Datenelemente erhalten, was eine häufigere Durchführung einer Objekterkennung und/oder -verfolgung erlaubt. Diese verläuft dann zudem unter günstigeren Bedingungen, da nur ein vergleichsweise kleiner Teil der Daten der jeweiligen Gesamtabtastung bzw. objektbezogenen Abtastung verändert wird, was vor allem die Objektverfolgung insgesamt erleichtert.

Bevorzugt wird das erfindungsgemäße Verfahren zur Bereitstellung korrigierter Daten für die Erzeugung von Modellen von Überwachungsbereichen verwendet, in denen sich die Sichtbereiche der Sensoren überlappen, da hierbei die Vorteile einer Objektfusion nach Korrektur und Zusammenführung der Rohdatenelemente aller Sensoren besonders ausgeprägt sind.

Die erfindungsgemäßen Verfahren können bevorzugt auf entsprechenden Datenverarbeitungsanlagen unter Verwendung entsprechender Programme durchgeführt werden. Insbesondere können Standardcomputer mit entsprechenden Programmen verwendet werden, es können aber auch zum Beispiel schnelle digitale Signalprozessoren Verwendung finden.

Bei einer bevorzugten Ausführungsform wird das Verfahren vollständig auf einer oder - verteilt - auf mehreren Auswerteeinrichtungen, die in einem Sensor oder mehreren Sensoren vorhanden sind, ausgeführt. Insbesondere im Fall von Laserscannern, die bereits Auswerteeinheiten mit Prozessoren wie zum Beispiel digitale Signalprozessoren und Speichereinrichtungen aufweisen, ist eine Ausführung des vollständigen Verfahrens auf einer oder mehreren der Auswerteeinheiten vorteilhaft. Eine Vorrichtung zur Erzeugung eines Modells eines Überwachungsbereichs enthält dann mindestens zwei optoelektronische Sensoren, insbesondere Laserscanner, deren Sichtbereiche einen Überwachungsbereich einschließen und von denen mindestens einer eine Auswerteeinrichtung aufweist, die zur Durchführung des erfindungsgemäßen Verfahrens und Ausgabe entsprechender Daten ausgebildet ist, und Datenverbindungen zur Übertragung der von den Laserscannern erfassten Rohdatenelemente zu der oder den Auswerteeinrichtungen in einem oder mehreren Sensoren.

Ein weiterer Gegenstand der Erfindung ist ein Computerprogramm mit Programmcode-Mitteln, um das erfindungsgemäße Verfahren zur Bereitstellung korrigierter Daten oder das erfindungsgemäße Verfahren zur Erzeugung eines Modells eines Überwachungsbereichs durchzuführen, wenn das Programm auf einem Computer ausgeführt wird.

Weiterer Gegenstand der Erfindung ist ein Computerprogrammprodukt mit Programmcode-Mitteln, die auf einem computerlesbaren Datenträger gespeichert sind, um das erfindungsgemäße Verfahren zur Bereitstellung korrigierter Daten und/oder das erfindungsgemäße Verfahren zur Erzeugung eines Modells eines Überwachungsbereichs durchzuführen, wenn das Computerprogrammprodukt auf einem Computer ausgeführt wird.

Die Erfindung umfasst außerdem eine Vorrichtung zur Erzeugung eines Modells eines Überwachungsbereichs mit mindestens zwei optoelektronischen Sensoren, insbesondere Laserscannern, deren Sichtbereiche einen Überwachungsbereich einschließen, einer Datenverarbeitungseinrichtung, die zur Durchführung des erfindungsgemäßen Verfahrens zur Bereitstellung korrigierter Daten oder des erfindungsgemäßen Verfahrens zur Erstellung eines Modells eines Überwachungsbereichs ausgebildet ist, und Datenverbindungen zur Übertragung der von den Laserscannern erfassten Rohdatenelemente zu der Datenverarbeitungseinrichtung.

Weiterer Gegenstand der Erfindung ist eine Vorrichtung zur Erzeugung eines Modells eines Überwachungsbereichs mit mindestens zwei optoelektronischen Sensoren, insbesondere Laserscannern, deren Sichtbereiche den Überwachungsbereichs einschließen und die jeweils eine Auswerteeinrichtung zur Objekterkennung und/oder -verfolgung und Ausgabe entsprechender Objektdaten aufweisen, einer Datenverarbeitungseinrichtung, die zur Durchführung des erfindungsgemäßen Verfahrens zur Bereitstellung korrigierter Daten oder des erfindungsgemäßen Verfahrens zur Erstellung eines Modells eines Überwachungsbereichs ausgebildet ist, und Datenverbindungen zur Übertragung der von den Laserscannern erfassten Rohdatenelemente und Objektdaten zu der Datenverarbeitungseinrichtung.

Vorzugsweise werden bei den erfindungsgemäßen Vorrichtungen schnelle, echtzeitfähige Datenverbindungen verwendet.

Bevorzugte Ausführungsformen der Erfindung werden nun beispielhaft anhand der Zeichnung beschrieben. Es zeigen:
- Fig. 1: eine schematische Draufsicht auf eine erfindungsgemäße Vorrichtung zur Erzeugung eines Modells eines Überwachungsbereichs,
- Fig. 2: ein struktogrammartiges Diagramm für den Ablauf eines Verfahrens zur Erzeugung eines Modells eines Überwachungsbereichs nach einer bevorzugten ersten Ausführungsform der Erfindung,
- Fig. 3: ein struktogrammartiges Diagramm für den Ablauf eines Verfahrens zur Erzeugung eines Modells eines Überwachungsbereichs nach einer bevorzugten zweiten Ausführungsform der Erfindung, und
- Fig. 4: ein struktogrammartiges Diagramm für den Ablauf eines Verfahrens zur Erzeugung eines Modells eines Überwachungsbereichs nach einer bevorzugten dritten Ausführungsform der Erfindung.

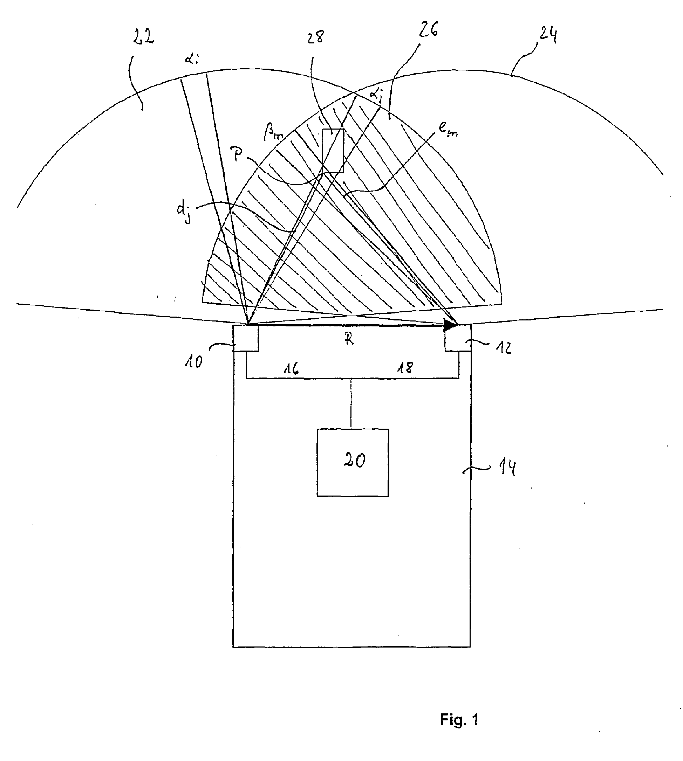

In Fig. 1 sind zwei Laserscanner 10 und 12 zur Erfassung der Lage von Gegenständen an einem Fahrzeug 14 gehalten. Die Laserscanner 10 und 12 sind über Datenverbindungen 16 und 18 mit einer Datenverarbeitungseinrichtung 20 verbunden, die eine nicht gezeigte Ausgabeeinrichtung aufweist.

Die Laserscanner 10 und 12 weisen als Sichtbereiche 22 und 24 jeweils Kreissektoren auf, die sich im Überwachungsbereich 26 überschneiden. Der Überwachungsbereich 26 kann auch beide Sichtbereiche 22 und 24 vollständig umfassen. Die Sichtbereiche sind zur besseren Darstellung sehr klein gewählt, typischerweise ist die Reichweite von Laserscannern sehr viel größer. In dem Überwachungsbereich befindet sich ein Gegenstand 28.

Die Laserscanner 10 und 12 arbeiten jeweils nach dem gleichen Verfahren. Der Laserscanner 10 sendet in bekannter Weise jeweils einen mit konstanter Winkelgeschwindigkeit umlaufenden Laserstrahl aus, wobei ebenfalls umlaufend in konstanten Zeitabständen Δτ zu Zeiten τᵢ in festen Winkelbereichen mit einem mittleren Winkel αᵢ detektiert wird, ob der Laserstrahl von einem Punkt eines Gegenstands reflektiert wird. Der Index i läuft dabei von 1 bis zur Anzahl der Winkelbereiche im Sichtbereich. Von diesen Winkelbereichen sind nur einzelne gezeigt, unter anderem der dem mittleren Winkel αᵢ zugeordnete Winkelbereich. Hier sind die Winkelbereiche zur deutlicheren Darstellung übertrieben groß gezeigt. In diesem Fall wird anhand der Laufzeit des Laserlichts der Abstand dᵢ des Punktes von dem Laserscanner 10 ermittelt. Der Laserscanner 10 erfasst daher als Rohdatenelemente für den Gegenstandspunkt P des Gegenstands 28 den Winkel αⱼ und den bei diesem Winkel festgestellten Abstand dj, das heißt die Position des Gegenstandspunkts in Polarkoordinaten. Die Menge M₁₀ der Rohdatenelemente, die von dem Laserscanner 10 erfasst wurden, enthält insgesamt Rohdatenelemente (αₖ, dₖ), wobei k eine natürliche Zahl zwischen 1 und der Anzahl der von dem Laserscanner 10 erfassten Rohdatenelemente ist. Entsprechend erfasst der Laserscanner 12 Rohdatenelemente (β₁, e₁), wobei eᵢ der Abstand eines Gegenstandspunktes ist, der im Winkelbereich um β₁ erfasst wurde und 1 eine natürliche Zahl zwischen 1 und der Anzahl der von dem Laserscanner 12 erfassten Rohdatenelemente ist. Diese Rohdatenelemente bilden eine Menge M₁₂ von Rohdatenelementen, die dem Laserscanner 12 zugeordnet ist. Der Gegenstandspunkt P hat in Fig. 1 die Koordinaten (βₘ, em).

Die Laserscanner 10 und 12 tasten ihren Sichtbereich jeweils in aufeinanderfolgenden Abtastungen ab, so dass für jeden der Laserscanner eine zeitliche Folge von Rohdatenmengen entsteht.

Eine Gruppe zeitlich einander zugeordneter Mengen von Rohdatenelementen wird jeweils von Mengen M₁₀ und M₁₂ gebildet, wobei der Beginn der Abtastung für eine der Mengen innerhalb des Zeitraums einer Abtastung für die andere Menge erfolgt. Dies bedeutet bei aufeinanderfolgenden Abtastungen des Sichtbereichs und entsprechender aufeinanderfolgender Ausgabe von Rohdatenmengen, dass eine Menge von Rohdatenelementen jeweils in zwei aufeinanderfolgenden Gruppen von Rohdatenmengen enthalten sein kann.

Bei der Datenverarbeitungseinrichtung 20 kann es sich um einen üblichen Personalcomputer handeln, der mit einem hinreichend schnellen Prozessor, einem Hauptspeicher sowie entsprechenden Schnittstellen für die Datenverbindungen 16 und 18 ausgestattet ist. Grundsätzlich reicht eine Datenverbindung zwischen den Laserscannern, wenn diese über Auswerteeinrichtungen verfügen, auf denen die Erstellung des Modells des Überwachungsbereichs möglich ist. Geeignet wären zum Beispiel Auswerteeinrichtungen mit entsprechend programmierten digitalen Signalprozessoren.

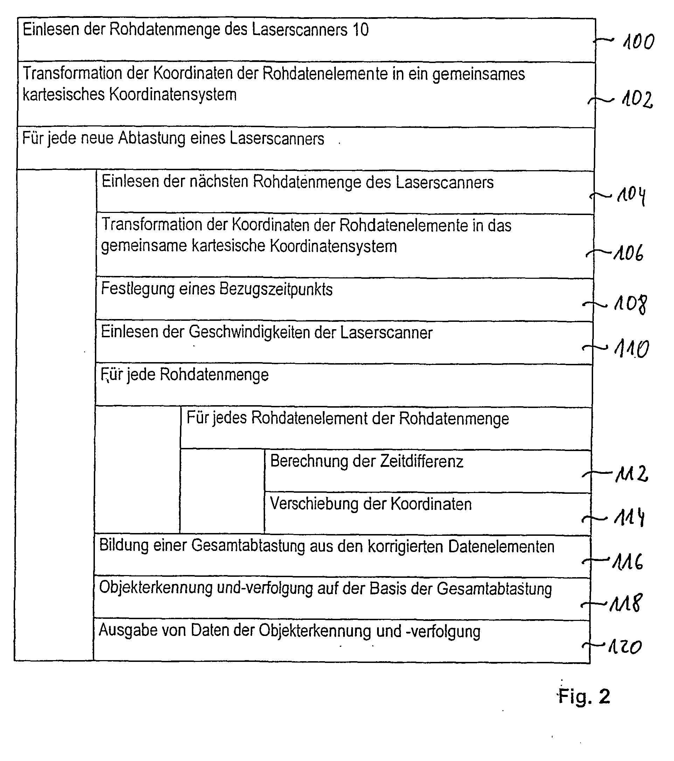

Bei einem ersten, in Fig. 2 veranschaulichten Verfahren zur Erstellung eines Umgebungsmodells werden Korrekturen in Bezug auf die Bewegung der Laserscanner 10 und 12 durchgeführt. Dazu werden in Schritt 100 zunächst die Rohdatenmengen des Laserscanners 10 eingelesen und in Schritt 102 in ein gemeinsames kartesisches Koordinatensystem transformiert. Als gemeinsames Koordinatensystem wird das System des Laserscanners 10 verwendet, so dass dessen Rohdatenelemente ohne weitere Verschiebung nur nach bekannten Formeln in kartesische Koordinaten überführt werden.

In Schritt 104 wird dann die nächste von einem der Laserscanner ausgegebene Rohdatenmenge eingelesen, wobei von Schritt 100 kommend der Beginn der Abtastung für die Menge M₁₂ während der Abtastung der Menge M₁₀ stattfindet, so dass die Abtastung für die Menge M₁₂ später abläuft als die für die Menge M₁₀. Im weiteren Verlauf des Verfahrens werden Rohdatenmengen jeweils abwechselnd von einem der beiden Laserscanner eingelesen, so dass immer die jeweils neueste Rohdatenmenge für jeden Laserscanner eingelesen ist. Die beiden Mengen bilden dabei jeweils eine Gruppe von Rohdatenmengen. Die Zeiten des Beginns der Abtastung werden jeweils durch ein entsprechendes Signal des Laserscanners bestimmt, auf dessen Eintreffen hin die Zeit des Eintreffens gespeichert wird.

In Schritt 106 werden die Koordinaten der Rohdatenelemente der in Schritt 104 eingelesenen Rohdatenmenge zunächst in kartesische Koordinaten überführt. Die Koordinaten der Rohdatenelemente der neu eingelesenen Menge, von Schritt 100 kommend ist dies M₁₂, werden nach der Überführung in kartesische Koordinaten entsprechend dem festen Relativvektor R von dem Laserscanner 10 zu dem Laserscanner 12 verschoben, wenn die Menge dem Laserscanner 12 zugeordnet ist, wodurch sich die Koordinaten in dem gemeinsamen Koordinatensystem ergeben.

In Schritt 108 wird dann ein Bezugszeitpunkt t_{F} festgelegt, zum Beispiel der Zeitpunkt des Beginns der späteren der den Rohdatenmengen entsprechenden Abtastungen.

In Schritt 110 werden jeweils vektorielle Geschwindigkeiten für die Laserscanner eingelesen. Die entsprechenden Geschwindigkeiten v₁₀ bzw. v₁₂ der Laserscanner 10 bzw. 12 sind dabei von entsprechenden, in Fig. 1 nicht gezeigten Sensoren des Fahrzeugs unter Berücksichtigung der Lage der Laserscanner 10 und 12 bestimmt. Bei einer einfacheren Näherung kann die Geschwindigkeit der Sensoren durch die Fahrzeuggeschwindigkeit ohne die Berücksichtigung der Lage der Sensoren gegeben sein. Diese Geschwindigkeiten sind jeweils den Rohdatenelementen in den Mengen M₁₀ bzw. M₁₂ zugeordnet.

Für jedes Rohdatenelement in jeder der Mengen M₁₀ und M₁₂ werden dann die Schritte 112 und 114 ausgeführt.

In Schritt 112 wird die Differenz zwischen einer als Zeitpunkt der Erfassung des Rohdatenelements definierten Zeit und der Bezugszeit berechnet. Die als Zeitpunkt der Erfassung definierte Zeit ergibt sich aus dem Zeitpunkt des Beginns der Abtastung und der Lage des Winkelbereichs, in dem das Rohdatenelement erfasst wurde. Wurde das Rohdatenelement im Winkelbereich αᵢ bzw. βᵢ erfasst, wird zu der Zeit des Beginns der Abtastung ein Betrag i*Δτ addiert.

In Schritt 114 werden dann die Koordinaten des Rohdatenelements um den Vektor verschoben, der sich aus Multiplikation des dem Rohdatenelement zugeordneten Geschwindigkeitsvektors v₁₀ oder v₁₂ mit der Zeitdifferenz aus Schritt 112 ergibt.

Aus diesen korrigierten Daten wird in Schritt 116 eine Gesamtabtastung gebildet, auf deren Basis in Schritt 118 eine Objekterkennung und/oder - verfolgung durchgeführt wird und in Schritt 120 entsprechende Daten ausgegeben werden.

Daraufhin wird mit Schritt 104 mit dem Einlesen der nächsten Rohdatenmenge fortgefahren, die im Beispiel ausgehend von Schritt 100 nach Durchlauf der folgenden Schritte die nächste Rohdatenmenge M₁₀ wäre, die die bisherige Menge M₁₀ ersetzt. Die Menge mit dem zeitlich früheren Beginn der Abtastung ist dann die nicht veränderte Menge M₁₂.

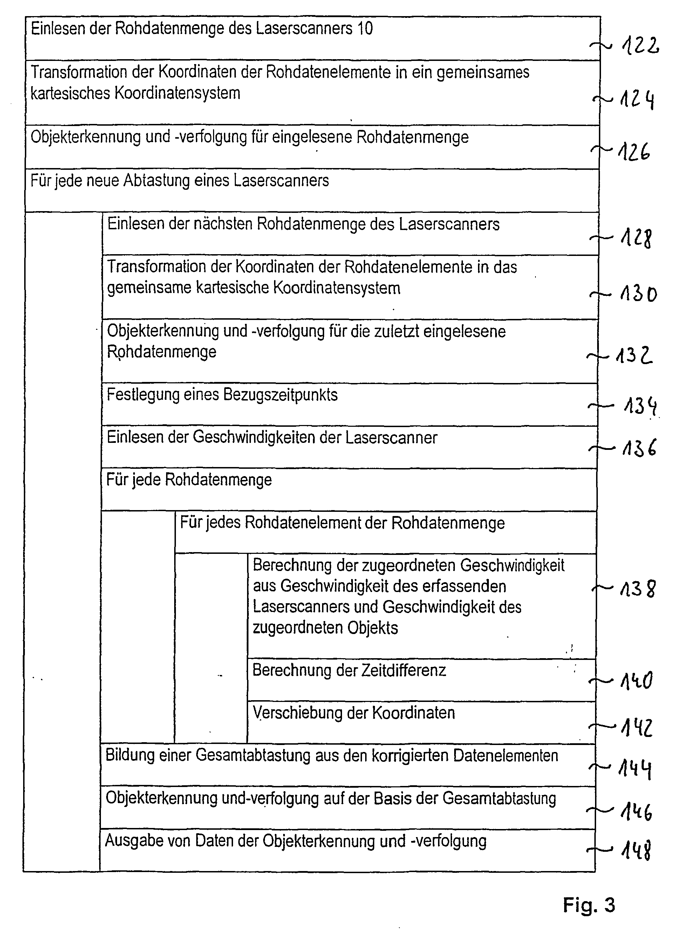

Das in Fig. 3 dargestellte Verfahren nach einer zweiten bevorzugten Ausführungsform der Erfindung läuft analog dem ersten Verfahren gemäß Fig. 2 ab, wobei zusätzlich Korrekturen im Hinblick auf die Bewegung von Gegenständen erfolgt. Schritte, die auch bei diesem Verfahren durchgeführt werden, werden daher nicht näher erläutert.

Die Schritte 122 und 124 sowie 128 und 130, in denen Rohdatenmengen eingelesen und in ein gemeinsames Koordinatensystem transformiert werden, entsprechen den Schritten 100 bis 106 des Verfahrens gemäß Fig. 2.

Im Unterschied zu dem Verfahren nach der ersten Ausführungsform werden in den Schritten 126 und 132 auf der Rohdatenmenge M₁₀ bzw. der nächsten eingelesenen Rohdatenmenge eine Objekterkennung und/oder -verfolgung durchgeführt und als kinematische Daten die Geschwindigkeiten der erkannten Objekte sowie die Zuordnung der Rohdatenelemente zu dem jeweiligen Objekt gespeichert. Hierdurch ergeben sich jeweils den Rohdatenelementen zugeordnete Objektgeschwindigkeiten. Zur Objekterkennung und/oder -verfolgung können zum Beispiel entsprechende, dem Fachmann bekannte Verfahren verwendet werden. Die Schritte 126 und 132 können auch vor den Schritten 124 und 130 ausgeführt werden, wobei dann eine Transformation auch der dabei gewonnenen Objektbewegungsdaten in das gemeinsame Koordinatensystem notwendig wäre.

Nach Festlegung des Bezugszeitpunkts in Schritt 134, der Schritt 108 des Verfahrens gemäß Fig. 2 entspricht, werden in Schritt 136, der Schritt 110 in Fig. 2 entspricht, die vektoriellen Geschwindigkeiten v₁₀ und v₁₂ eingelesen.

In Schritt 138 wird dann für jedes Rohdatenelement in jeder Rohdatenmenge ein dem Rohdatenelement zugeordneter Geschwindigkeitsvektor durch Addition der der Rohdatenmenge bzw. dem diese erfassenden Laserscanner zugeordneten Geschwindigkeit v₁₀ bzw. v₁₂ und der dem entsprechende Rohdatenelement zugeordneten Objektgeschwindigkeit bestimmt.

In Schritt 140, der Schritt 112 in Fig. 2 entspricht, wird die Differenz zwischen einer als Zeitpunkt der Erfassung des Rohdatenelements definierten Zeit und der Bezugszeit berechnet.

In Schritt 142 werden dann die Koordinaten des Rohdatenelements um den Vektor verschoben, der sich aus der Multiplikation des dem Rohdatenelement in Schritt 138 zugeordneten Geschwindigkeitsvektors mit der Zeitdifferenz aus Schritt 140 ergibt.

In den Schritten 144, 146 und 148, die den Schritten 116, 118 und 120 in Fig. 2 entsprechen, werden dann eine Gesamtabtastung mit auf einen gemeinsamen Bezugszeitpunkt korrigierten Datenelementen gebildet und hierauf basierend eine eine Objekterkennung und/oder -verfolgung unabhängig von den Objekterkennungen und/oder -verfolgungen in den Schritten 126 und 132 berechnet und entsprechende Daten ausgegeben.

Das Verfahren wird dann mit Schritt 128 fortgesetzt.

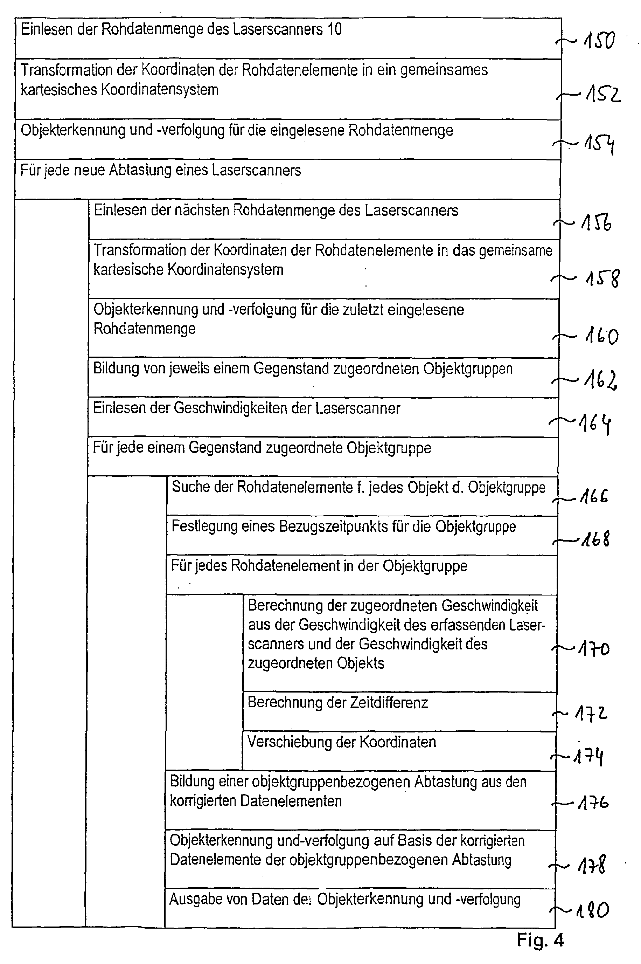

Bei dem in Fig. 4 veranschaulichten Verfahren nach einer dritten Ausführungsform der Erfindung wird im Unterschied zu dem Verfahren nach der zweiten Ausführungsform gemäß Fig. 3 nach der Korrektur der Daten für jeden Gegenstand getrennt eine Objekterkennung und -verfolgung durchgeführt. Es werden dabei einige Schritte wie bei dem Verfahren nach der zweiten Ausführungsform ausgeführt und daher hier nicht näher beschrieben.

In den Schritten 150, 152, 154, 156, 158 und 160, die den Schritten 122, 124, 126, 128, 130 und 132 von Fig. 3 entsprechen, werden die Rohdatenelemente eingelesen, deren Koordinaten in ein gemeinsames Koordinatensystem transformiert und auf den jeweiligen Rohdatenmengen eine Objekterkennung und/oder -verfolgung berechnet.

In Schritt 162 werden durch Anwendung bekannter Verfahren zur Objekterkennung und/oder -verfolgung aus den in den Schritten 154 und 160 in allen Mengen von Rohdatenelementen erkannten Objekten Objektgruppen gebildet, die Objekte enthalten, die als demselben Gegenstand entsprechend erkannt werden.

Die vektoriellen Geschwindigkeiten der Sensoren bzw. Laserscanner 10 und 12 werden in Schritt 164 entsprechend Schritt 108 in Fig. 2 eingelesen.

Die folgenden Schritte 166 bis 180 werden für alle Objektgruppen durchgeführt.

In Schritt 166 werden für eine Objektgruppe in den beiden Rohdatenmengen M₁₀ und M₁₂ die dem Objekt jeweils zugeordneten Rohdatenelemente gesucht.

In Schritt 168 wird für die Objektgruppe als Bezugszeitpunkt die als Erfassungszeitpunkt definierte Zeit desjenigen Rohdatenelements gewählt, das gemäß der als Erfassungszeitpunkt definierten Zeiten der Rohdatenelemente zuerst erfasst wurde.

Für jedes der einem Objekt der Objektgruppe zugeordneten Rohdatenelementn wird dann in Schritt 170 ein Gesamtgeschwindigkeitsvektor bestimmt, der sich aus der eingelesenen Geschwindigkeit desjenigen Laserscanners, der das Rohdatenelement erfasst hat, und der bei der Objekterkennung und/oder -verfolgung in Schritt 154 bzw. 160 berechneten Geschwindigkeit dieses Rohdatenelements durch Addition berechnet.

In Schritt 172 werden dann für jedes der den Objekten der Objektgruppe zugeordneten Rohdatenelemente die Zeitdifferenz wie in Schritt 140 in Fig. 3 berechnet und in Schritt 174 dessen Koordinaten entsprechend dem Produkt aus Gesamtgeschwindigkeitsvektor und Zeitdifferenz verschoben.

In Schritt 176 werden die so korrigierten Datenelemente einer Objektgruppe unter Zuordnung der jeweiligen Bezugszeitpunkte zu einer der Objektgruppe zugeordneten Abtastung zusammengeführt und in Schritt 178 auf dieser Basis eine Objekterkennung und/oder -verfolgung durchgeführt, deren Ergebnisse in Schritt 180 ausgegeben werden.

Alternativ können jeweils nach der Bildung einer jeden Objektgruppe die Schritte 166 bis 180 ausgeführt werden.

Nach Abarbeitung aller Objektgruppen wird mit Schritt 156 fortgefahren.

Zusammenfassend unterscheiden sich die geschilderten Verfahren nach den drei Ausführungsformen dadurch, dass bei dem ersten, in Fig. 2 veranschaulichten Verfahren eine Korrektur nur in Bezug auf die Bewegung der Laserscanner und der zeitlichen Latenzen erfolgt, während bei dem Verfahren nach der zweiten Ausführungsform zusätzlich bei der Korrektur die Bewegung von erfassten Gegenständen berücksichtigt wird. Bei diesen beiden Ausführungsformen erfolgt nach der Korrektur eine Objekterkennung und -verfolgung auf der Basis aller korrigierten Datenelemente. Bei dem Verfahren nach der dritten Ausführungsform werden im wesentlichen die gleichen Korrekturen wie bei dem Verfahren nach der zweiten Ausführungsform, das heißt in Bezug auf die Bewegung der Laserscanner, der Gegenstände und der zeitlichen Latenzen durchgeführt, wobei jedoch die Bezugszeitpunkte, bezüglich derer korrigiert wird, auf einzelne Gegenstände bezogen sind und für die korrigierten Datenelemente, die einem Gegenstand entsprechen, jeweils eine separate Objekterkennung und -verfolgung durchgeführt wird.

### Bezugszeichenliste

- 10: Laserscanner
- 12: Laserscanner
- 14: Fahrzeug
- 16: Datenverbindung
- 18: Datenverbindung
- 20: Datenverarbeitungseinrichtung
- 22: Sichtbereich
- 24: Sichtbereich
- 26: Überwachungsbereich
- 28: Gegenstand

## Patentansprüche

1. Verfahren zur Bereitstellung korrigierter Daten zur Erzeugung eines Modells eines Überwachungsbereichs (26), der in jeweiligen Sichtbereichen (22, 24) von mindestens zwei optoelektronischen Sensoren (10, 12), insbesondere Laserscannern, zur Bestimmung der Lage von erfassten Gegenständen (28) liegt und Gegenstandspunkte enthält, auf der Basis von Mengen von Gegenstandspunkten in dem Überwachungsbereich entsprechenden Rohdatenelementen,
- wobei die Mengen von Rohdatenelementen jeweils von einem der Sensoren (10, 12) bei einer Abtastung seines Sichtbereichs (22, 24) erfasst und diesem zugeordnet sind,
- wobei die Mengen von Rohdatenelementen verschiedener Sensoren (10, 12) mit einer bestimmten zeitlichen Zuordnung zueinander eine Gruppe bilden und
- wobei die Rohdatenelemente der Mengen zumindest die Koordinaten von von dem zugeordneten Sensor (10, 12) erfassten Gegenstandspunkten jeweils in Bezug auf die Lage des erfassenden Sensors (10, 12) umfassen,
bei dem zur Bildung von den Mengen von Rohdatenelementen der Gruppe entsprechenden korrigierten Mengen korrigierter Datenelemente für jede Menge der Gruppe die in den Rohdatenelementen enthaltenen Koordinaten unter Berücksichtigung der Relativlage der jeweiligen Sensoren (10, 12) in ein gemeinsames Koordinatensystem transformiert werden,
**dadurch gekennzeichnet, dass** für jede Menge von Rohdatenelementen der Gruppe vor Bildung der entsprechenden korrigierten Menge eine Objekterkennung und -verfolgung auf der Basis der Rohdatenelemente der Menge durchgeführt wird, wobei jedem erkannten Objekt Rohdatenelemente und jedem dieser Rohdatenelemente bei der Objektverfolgung berechnete Bewegungsdaten zugeordnet werden, und dass bei der Bildung der korrigierten Mengen Ergebnisse der Objekterkennung und -verfolgung auf der Basis der einzelnen Mengen zur Korrektur verwendet werden.

2. Verfahren nach Anspruch 1,
**dadurch gekennzeichnet,**
**dass** bei der Bildung der korrigierten Mengen für jede Menge die Koordinaten der Rohdatenelemente jeweils entsprechend der tatsächlichen oder einer daran angenäherten Bewegung des diese erfassenden Sensors (10, 12) und der Differenz zwischen einer als Zeitpunkt der Erfassung der jeweiligen Rohdatenelemente definierten Zeit und einem Bezugszeitpunkt korrigiert werden.

3. Verfahren nach Anspruch 2,
**dadurch gekennzeichnet,**
**dass** als Zeitpunkt der Erfassung der Rohdatenelemente für alle Rohdatenelemente einer Menge eine als Zeitpunkt der Erfassung der Menge definierte Zeit verwendet wird.

4. Verfahren nach Anspruch 2 oder 3,
**dadurch gekennzeichnet,**
**dass** bei der Festlegung der als Zeitpunkt der Erfassung eines Rohdatenelements definierten Zeit der zeitliche Abstand der Erfassung der einzelnen Rohdatenelemente der Menge zueinander berücksichtigt wird.

5. Verfahren nach einem der vorhergehenden Ansprüche,
**dadurch gekennzeichnet,**
**dass** bei der Bildung der korrigierten Mengen für jede Menge die Koordinaten der Rohdatenelemente entsprechend der ihnen zugeordneten Bewegungsdaten und der Differenz zwischen einer als Zeitpunkt der Erfassung der Rohdatenelemente definierten Zeit und einem Bezugszeitpunkt der Gruppe oder Menge korrigiert werden.

6. Verfahren nach einem der Ansprüche 2 bis 5,
**dadurch gekennzeichnet,**
**dass** der Bezugszeitpunkt zwischen der frühesten als Erfassungszeit definierten Zeit eines Rohdatenelements einer der Mengen der Gruppe und der zeitlich letzten als Erfassungszeit definierten Zeit eines Rohdatenelements einer der Mengen der Gruppe liegt.

7. Verfahren nach einem der vorhergehenden Ansprüche,
**dadurch gekennzeichnet,**
**dass** vor oder bei Bildung der Mengen korrigierter Datenelemente jeweils einem Gegenstand (28) zugeordnete Objektgruppen mit Objekten, die auf der Basis jeweils einer Menge von Rohdaten erstellt wurden und als einem Gegenstand(28) entsprechend erkannt werden, gebildet werden,
**dass** für jede einem Gegenstand (28) zugeordnete Objektgruppe die zugehörigen Rohdatenelemente in jeder Menge gesucht werden,
**dass** für jede einem Gegenstand (28) zugeordnete Objektgruppe ein dieser zugeordneter Bezugszeitpunkt festgelegt wird, und
**dass** bei der Bildung der Mengen korrigierter Datenelemente für jedes Objekt die Koordinaten der ihm zugeordneten Rohdatenelemente in allen Mengen der Gruppe entsprechend der Bewegung des jeweiligen diese Rohdatenelemente erfassenden Sensors (10, 12) und/oder der diesen Rohdatenelementen zugeordneten Bewegungsdaten und der Differenz zwischen einer als Zeitpunkt der Erfassung des Rohdatenelements definierten Zeit und dem Bezugszeitpunkt des Objekts korrigiert werden.

8. Verfahren nach Anspruch 7,
**dadurch gekennzeichnet,**
**dass** die den Objektgruppen jeweils zugeordneten Bezugszeitpunkte zwischen der frühesten als Zeitpunkt der Erfassung definierten Zeit eines einem Objekt der jeweiligen Objektgruppe zugeordneten Rohdatenelements und der zeitlich letzten als Zeitpunkt der Erfassung definierten Zeit eines einem Objekt der jeweiligen Objektgruppe zugeordneten Rohdatenelements liegt.

9. Verfahren nach einem der vorhengehenden Ansprüche,
**dadurch gekennzeichnet,**
**dass** die Objekterkennung und/oder -verfolgung auf der Basis der Rohdatenelemente einer Menge in einer Auswerteeinheit des die Rohdaten der Menge erfassenden Sensors (10, 12) und die anderen Schritte in einer anderen Datenverarbeitungseinrichtung (20) durchgeführt werden.

10. Verfahren nach einem der Ansprüche 7 bis 9,
**dadurch gekennzeichnet,**
**dass** die korrigierten Datenelemente für eine Objektgruppe auch den dieser Objektgruppe zugeordneten Bezugszeitpunkt enthalten.

11. Verfahren nach einem der vorhergehenden Ansprüche,
**dadurch gekennzeichnet,**
**dass** es iterativ für jeweils zeitlich aufeinanderfolgende Abtastungen der Sensoren (10, 12) durchgeführt wird,
wobei nach Einlesen mindestens einer einem der Sensoren zugeordneten neuen Menge von Rohdatenelementen, die bei einer späteren Abtastung erfasst wurden als die Rohdatenelemente der bisher in der Gruppe von Mengen von Rohdatenelementen enthaltenen, dem Sensor zugeordneten Menge von Rohdatenelementen, eine neue Gruppe gebildet wird, die anderen Sensoren zugeordnete Mengen von Rohdatenelementen der bisherigen Gruppe sowie die neue Menge von Rohdatenelementen enthält, und
**dass** es anschließend auch für die neue Gruppe von Mengen von Rohdatenelementen durchgeführt wird, wobei bevorzugt bereits bei der vorhergehenden Iteration erhaltene Daten verwendet werden.

12. Verfahren nach einem der vorhergehenden Ansprüche,
**dadurch gekennzeichnet,**
**dass** das Modell nur für einen Überwachungsbereich (26) erzeugt wird, in dem sich die Sichtbereiche (22, 24) der Sensoren (10, 12) überlappen.

13. Verfahren zur Erzeugung eines Modells eines Überwachungsbereichs (26), der in jeweiligen Sichtbereichen (22, 24) von mindestens zwei optoelektronischen Sensoren (10, 12), insbesondere Laserscannern, zur Bestimmung der Lage von erfassten Gegenständen (28) liegt und Gegenstandspunkte enthält,
bei dem das Verfahren zur Bereitstellung korrigierter Daten nach einem der vorhergehenden Ansprüche durchgeführt wird, und
eine Objekterkennung und/oder -verfolgung auf der Basis aller korrigierten Datenelemente erfolgt:

14. Verfahren nach Anspruch 13,
**dadurch gekennzeichnet,**
**dass** eine Objekterkennung und/oder -verfolgung auf der Basis der korrigierten Datenelemente für jede Objektgruppe getrennt durchgeführt wird, wobei bevorzugt die zugeordneten Bezugszeitpunkte berücksichtigt werden.

15. Verfahren nach einem der vorhergehenden Ansprüche,
**dadurch gekennzeichnet,**
**dass** es vollständig in einer Auswerteeinrichtung eines oder mehrerer Sensoren (10, 12) durchgeführt wird.

16. Computerprogramm mit Programmcode-Mitteln, um die Verfahren nach einem der Ansprüche 1 bis 15 durchzuführen, wenn das Programm auf einem Computer ausgeführt wird.

17. Computerprogrammprodukt mit Programmcode-Mitteln, die auf einem computerlesbaren Datenträger gespeichert sind, um das Verfahren nach einem der Ansprüche 1 bis 15 durchzuführen, wenn das Computerprogrammprodukt auf einem Computer ausgeführt wird.

18. Vorrichtung zur Erzeugung eines Modells eines Überwachungsbereichs (26), der Gegenstandspunkte enthält, auf der Basis von Mengen von Gegenstandspunkten in dem Überwachungsbereich entsprechenden Rohdatenelementen, mit
mindestens zwei optoelektronischen Sensoren (10, 12), insbesondere Laserscannern, deren Sichtbereiche (22, 24) zur Bestimmung der Lage von erfassten Gegenständen (28) den Überwachungsbereich einschließen, zur Erfassung der Mengen von Rohdatenelementen jeweils von einem der Sensoren (10, 12) bei einer Abtastung seines Sichtbereichs (22, 24), wobei die Mengen von Rohdatenelementen jeweils dem einen der Sensoren (10, 12) zugeordnet sind, wobei die Mengen von Rohdatenelementen verschiedener Sensoren (10, 12) mit einer bestimmten zeitlichen Zuordnung zueinander eine Gruppe bilden, und wobei die Rohdatenelemente der Mengen zumindest die Koordinaten von von dem zugeordneten Sensor (10, 12) erfassten Gegenstandspunkten jeweils in Bezug auf die Lage des erfassenden Sensors (10, 12) umfassen,
einer Datenverarbeitungseinrichtung (20) zur Bereitstellung korrigierter Daten, die zur Transformation der in den Rohdatenelementen enthaltenen Koordinaten unter Berücksichtigung der Relativlage der jeweiligen Sensoren (10, 12) in ein gemeinsames Koordinatensystem zur Bildung von den Mengen von Rohdatenelementen der Gruppe entsprechenden korrigierten Mengen korrigierter Datenelemente für jede Menge der Gruppe ausgebildet ist, und Datenverbindungen (16, 18) zur Übertragung der von den Sensoren (10, 12) erfassten Rohdatenelemente zu der Datenverarbeitungseinrichtung (20),**dadurch gekennzeichnet, dass** für jede Menge von Rohdatenelementen der Gruppe vor Bildung der entsprechenden korrigierten Menge eine Objekterkennung und -verfolgung auf der Basis der Rohdatenelemente der Menge durchgeführt wird, wobei jedem erkannten Objekt Rohdatenelemente und jedem dieser Rohdatenelemente bei der Objektverfolgung berechnete Bewegungsdaten zugeordnet werden, und
dass bei der Bildung der korrigierten Mengen Ergebnisse der Objekterkennung und -verfolgung auf der Basis der einzelnen Mengen zur Korrektur verwendet werden.

19. Vorrichtung nach Anspruch 18,
**dadurch gekennzeichnet,**
**dass** die optoelektronischen Sensoren (10, 12), jeweils eine Auswerteeinrichtung zur Objekterkennung und/oder -verfolgung und Ausgabe entsprechender Objektdaten aufweisen, und
**dass** die Datenverbindungen (16, 18) zur Übertragung der Objektdaten zu der Datenverarbeitungseinrichtung (20) ausgelegt sind.

## Claims

1. A method for the provision of corrected data for the production of a model of a monitored zone (26), which lies in respective fields of view (22, 24) of at least two optoelectronic sensors (10, 12), in particular laser scanners, for the determination of the position of detected real objects (28) and contains real object points, the corrected data being provided on the basis of sets of raw data elements corresponding to real object points in the monitored zone,
- wherein the sets of raw data elements are respectively detected by one of the sensors (10, 12) on scanning of its field of view (22, 24) and are associated with it;
- wherein the sets of raw data elements of different sensors (10, 12) with a specific time association relative to another form a group; and
- wherein the raw data elements of the sets include at least the coordinates of real object points detected by the associated sensor (10, 12) in each case with respect to the position of the detecting sensor (10, 12),
wherein, for the formation of corrected sets of corrected data elements corresponding to the sets of raw data elements of the group, the coordinates contained in the raw data elements are transformed for each set of the group into a common coordinate system, while taking account of the relative position of the respective sensors (10, 12),
**characterized in that**,
for each set of raw data elements of the group, a object recognition and object tracking is carried out on the basis of the raw data elements of the set before the formation of the corresponding corrected set, with raw data elements being associated with each recognized real object and movement data calculated in the object tracking being associated with each of these raw data elements; and
**in that**, in the formation of the corrected sets, results of the object detection and object tracking on the basis of the individual sets are used for the correction.

2. A method in accordance with claim 1, **characterized in that**, on the formation of the corrected sets, the coordinates of the raw data elements are corrected for each set, in each case in accordance with the actual movement of the sensor (10, 12) detecting it, or with a movement approximated thereto, and in accordance with the difference between a time defined as the point in time of the detection of the respective raw data elements and a reference point in time.

3. A method in accordance with claim 2, **characterized in that** a time defined as the point in time of the detection of the set is used as the point in time of the detection of the raw data elements for all raw data elements of a set.

4. A method in accordance with claim 2 or claim 3, **characterized in that**, on the fixing of the time defined as the point in time of the detection of a raw data element, the time interval of the detection of the individual raw data elements of the set with respect to one another are taken into account.

5. A method in accordance with any one of the preceding claims, **characterized in that**, in the formation of the corrected sets, the coordinates of the raw data elements are corrected for each set in accordance with the movement data associated with them and in accordance with the difference between a time defined as the point in time of the detection of the raw data elements and a reference point in time of the group or set.

6. A method in accordance with any one of claims 2 to 5, **characterized**
**in that** the reference point in time lies between the earliest time (defined as the detection time) of a raw data element of one of the sets of the group and the timewise last time (defined as the detection time) of a raw data element of one of the sets of the group.

7. A method in accordance with any one of the preceding claims, **characterized**
**in that**, before or on the formation of the sets of corrected data elements, object groups are formed which are associated in each case with an real object (28) and which have objects which were prepared on the basis in each case of one set of raw data and are recognized as corresponding to an real object (28);
**in that**, for each object group associated with an real object (28), the associated raw data elements in each set are sought;
**in that**, for each object group associated with an real object (28), a reference point in time associated with it is fixed; and
**in that**, on the formation of the sets of corrected data elements, for each object the coordinates of the raw data elements associated with it in all sets of the group are corrected in accordance with the movement of the respective sensor (10, 12) detecting these raw data elements and/or in accordance with the movement data associated with these raw data elements and in accordance with the difference between a time defined as the point in time of the detection of the raw data element and the reference point in time for the object.

8. A method in accordance with claim 7, **characterized in that** the reference points in time respectively associated with the object groups lie between the earliest time (defined as the point in time of the detection) of a raw data element associated with a object of the respective object group and the timewise last time (defined as the point in time of the detection) of a raw data element associated with a object of the respective object group.

9. A method in accordance with any one of the preceding claims, **characterized in that** the real object recognition and/or real object tracking is/are carried out on the basis of the raw data elements of a set in an evaluation unit of the sensor (10, 12) detecting the raw data of the set and the other steps are carried out in another data processing device (20).

10. A method in accordance with any one of claims 7 to 9, **characterized**
**in that** the corrected data elements for an real object group also contain the reference point in time associated with this real object group.

11. A method in accordance with any one of the preceding claims, **characterized**
**in that** it is carried out iteratively for respective sequential scans of the sensors (10, 12),
wherein, after reading in of at least one new set of raw data elements which are associated with one of the sensors and which were detected in a later scan than the raw data elements of the set of raw data elements previously contained in the group of sets of raw data elements and associated with the sensor, a new group is formed which contains the sets of raw data elements of the previous group associated with other sensors and contains the new set of raw data elements; and
**in that** is it subsequently also carried out for the new group of sets of raw data elements, with data already obtained in the preceding iteration preferably being used.

12. A method in accordance with any one of the preceding claims, **characterized in that** the model is only produced for a monitored zone (26) in which the fields of view (22, 24) of the sensors (10, 12) overlap.

13. A method for the production of a model of a monitored zone (26) which lies in respective fields of view (22, 24) of at least two optoelectronic sensors (10, 12), in particular laser scanners, for the determination of the position of detected real objects (28) and contains real object points,
in which the method for the provision of corrected data is carried out in accordance with any one of the preceding claims; and
an real object recognition and/or real object tracking takes place on the basis of all corrected data elements.

14. A method in accordance with claim 13, **characterized in that** an real object recognition and/or real object tracking is/are carried out on the basis of the corrected data elements separately for each object group, with the associated reference points in time preferably being taken into account.

15. A method in accordance with any one of the preceding claims, **characterized in that** it is completely carried out in an evaluation device of one or more sensors (10, 12).

16. A computer program with program code means to carry out any one of claims 1 to 15, when the program is carried out on a computer.

17. A computer program product with program code means which are stored on a machine-legible data carrier to carry out the method in accordance with any one of claims 1 to 15, when the computer program product is carried out on a computer.

18. An apparatus for the production of a model of a monitored zone (26) which contains real object points, on the basis of sets of raw data elements corresponding to real object points in the monitored zone, having
at least two optoelectronic sensors (10, 12), in particular laser scanners, whose fields of view (22, 24) for the determination of the position of detected real objects include the monitored zone, for the detection of sets of raw data elements in each case by one of the sensors (10, 12) on a scanning of its field of view (22, 24), wherein the sets of raw data elements of different sensors (10, 12) with a specific time association relative to another form a group and wherein the raw data elements of the sets include at least the coordinates of real object points detected by the associated sensor (10, 12) in each case with respect to the position of the detecting sensor (10, 12),
having a data processing device (20) for the provision of corrected data which is designed for the transformation of the coordinates contained in the raw data elements taking account of the relative position of the respective sensors (10, 12) into a common coordinate system for the formation of corrected sets of corrected data elements corresponding to the sets of raw data elements of the group for each set of the group; and
having data links (16, 18) for the transfer of the raw data elements detected by the sensors (10, 12) to the data processing device (20),
**characterized in that**,
for each set of raw data elements of the group, a object recognition and object tracking is carried out on the basis of the raw data elements of the set before the formation of the corresponding corrected set, with raw data elements being associated with each recognized real object and movement data calculated in the object tracking being associated with each of these raw data elements; and
**in that**, in the formation of the corrected sets, results of the object detection and object tracking on the basis of the individual sets are used for the correction.

19. An apparatus fin accordance with claim 18, **characterized in that** the optoelectronic sensors (10, 12) each have an evaluation device for the object recognition and/or object tracking and for the output of corresponding object data; and
**in that** the data links (16, 18) are designed for the transmission of the object data to the data processing device (20).

## Revendications

1. Procédé de mise à disposition de données corrigées pour générer un modèle d'une zone de surveillance (26) qui est située dans des zones de visée (22, 24) respectives d'au moins deux capteur optoélectroniques (10, 12), en particulier de scanners laser pour déterminer la position d'articles détectés (28) et qui contient des points d'articles, sur la base de quantités de points d'article dans des éléments de données brutes correspondant à la zone de surveillance,
- les quantités d'éléments de données brutes étant détectées respectivement par un des capteurs (10, 12) lors d'un balayage de sa zone de visée (22, 24) et étant associées à celle-ci,
- les quantités d'éléments de données brutes de différents capteurs (10, 12) formant un groupe avec une affectation temporelle réciproque, et
- les quantités d'éléments de données brutes comprenant au moins les coordonnées de points d'articles détectés par le capteur (10, 12) associé en rapport respectif avec la position du capteur (10, 12) détectant,
dans lequel pour former des quantités corrigées d'éléments de données, correspondant aux quantités d'éléments de données brutes du groupe, pour chaque quantité du groupe, les coordonnées contenues dans les éléments de données brutes sont transformées en un système de coordonnées commun en tenant compte de la position relative des capteurs (10, 12) respectifs,
**caractérisé en ce que**
pour chaque quantité d'éléments de données brutes du groupe, on effectue, avant la formation de la quantité corrigée correspondante, une reconnaissance et une poursuite d'objet sur la base des éléments de données brutes de la quantité, et des données de mouvement calculées lors de la poursuite de l'objet étant associées à chaque objet reconnu et à chacun de ces éléments de données brutes, et
**en ce que** lors de la formation des quantités corrigées, on utilise, pour la correction, des résultats de la reconnaissance et de la poursuite d'objet sur la base des quantités individuelles.

2. Procédé selon la revendication 1,
**caractérisé en ce que**
lors de la formation des quantités corrigées pour chaque quantité, on corrige les coordonnées des éléments de données brutes selon respectivement le mouvement réel, ou un mouvement qui s'en approche, du capteur (10, 12) détectant celui-ci et selon la différence entre un temps défini en tant qu'instant de la détection des éléments de données brutes respectifs et un instant de référence.

3. Procédé selon la revendication 2,
**caractérisé en ce que**
l'on utilise, à titre d'instant de la détection des éléments de données brutes pour tous les éléments de données brutes d'une quantité, un temps défini en tant qu'instant de la détection de la quantité.

4. Procédé selon la revendication 2 ou 3,
**caractérisé en ce que**
lors de la détermination du temps défini en tant qu'instant de la détection d'un élément de données brutes, on tient compte de l'intervalle de temps réciproque de la détection des éléments de données brutes individuels de la quantité.

5. Procédé selon l'une quelconque des revendications précédentes,
**caractérisé en ce que**
lors de la formation des quantités corrigées pour chaque quantité, on corrige les coordonnées des éléments de données brutes selon les données de mouvement qui leur sont associées et selon la différence entre un temps défini en tant qu'instant de la détection des éléments de données brutes et un instant de référence du groupe ou de la quantité.

6. Procédé selon l'une des revendications 2 à 5,
**caractérisé en ce que**
l'instant de référence est situé entre le temps, défini au plus tôt en tant que temps de détection, d'un élément de données brutes d'une des quantités du groupe et le temps, défini temporellement en dernier en tant que temps de détection, d'un élément de données brutes d'une des quantités du groupe.

7. Procédé selon l'une quelconque des revendications précédentes,
**caractérisé en ce que**
avant ou lors de la formation des quantité d'éléments de données corrigées, on forme des groupes d'objets associés à un article (28) respectif, avec des objets qui ont été établis sur la base d'une quantité respective de données brutes et qui sont reconnus de manière correspondante en tant qu'un article (28),
**en ce que** pour chaque groupe d'objets associé à un article (28), on cherche dans chaque quantité les éléments de données brutes apparentées,
**en ce que** pour chaque groupe d'objets associé à un article (28), on détermine un instant de référence associé à celui-ci, et
**en ce que** lors de la formation des quantités d'éléments de données corrigées, on corrige pour chaque objet les coordonnées des éléments de données brutes qui lui sont associés dans toutes les quantités du groupe selon le mouvement du capteur (10, 12) respectif détectant ces éléments de données brutes et/ou l'on corrige les données de mouvement associées à ces éléments de données brutes et la différence entre un temps défini en tant qu'instant de la détection de l'élément de données brutes et l'instant de référence de l'objet.

8. Procédé selon la revendication 7,
**caractérisé en ce que**
les instants de référence associés aux groupes d'objets respectifs se situent entre le temps, défini au plus tôt en tant qu'instant de la détection, d'un élément de données brutes associé à un objet du groupe d'objets respectif et le temps, défini temporellement en dernier en tant qu'instant de la détection, d'un élément de données brutes associé à un objet du groupe d'objets respectif.

9. Procédé selon l'une quelconque des revendications précédentes,
**caractérisé en ce que**
l'on effectue la reconnaissance et/ou la poursuite d'objets sur la base des éléments de données brutes d'une quantité dans une unité d'évaluation du capteur (10, 12) détectant les éléments de données brutes de la quantité, et les autres étapes dans un autre dispositif de traitement de données (20).

10. Procédé selon l'une des revendications 7 à 9,
**caractérisé en ce que**
les éléments de données corrigées pour un groupe d'objets contiennent aussi l'instant de référence associé à ce groupe d'objets.

11. Procédé selon l'une quelconque des revendications précédentes,
**caractérisé en ce que**
on l'exécute de manière itérative pour des balayages des capteurs (10, 12), qui se succèdent respectivement dans le temps,
et après la lecture d'au moins une nouvelle quantité d'éléments de données brutes associés à un des capteurs, qui ont été détectées lors d'un balayage plus tardif que les éléments de données brutes de la quantité d'éléments de données brutes, associée au capteur et contenue jusqu'à présent dans le groupe de quantités d'éléments de données brutes, est formé un nouveau groupe qui contient des quantités d'éléments de données brutes du groupe précédent, associées à d'autres capteurs, ainsi que les nouvelles quantités d'éléments de données brutes, et
**en ce qu'**on l'exécute ensuite aussi pour le nouveau groupe de quantités d'éléments de données brutes, en utilisant de préférence les données déjà obtenues lors de l'itération précédente.

12. Procédé selon l'une quelconque des revendications précédentes,
**caractérisé en ce que**
le modèle n'est généré que pour une zone de surveillance (26) dans laquelle les zones de visée (22, 24) des capteurs (10, 12) se chevauchent.

13. Procédé pour la génération d'un modèle d'une zone de surveillance (26) qui est située dans des zones de visée (22, 24) respectives d'au moins deux capteur optoélectroniques (10, 12), en particulier de scanners laser pour déterminer la position d'articles (28) détectés et qui contient des points d'articles,
dans lequel on exécute le procédé de mise à disposition de données corrigées selon l'une quelconque des revendications précédentes, et une reconnaissance et/ou une poursuite d'objets a lieu sur la base de tous les éléments de données corrigées.

14. Procédé selon la revendication 13,
**caractérisé en ce que**
l'on effectue séparément pour chaque groupe d'objets une reconnaissance et/ou une poursuite d'objets sur la base des éléments de données corrigées, en tenant de préférence compte des instants de référence associés.

15. Procédé selon l'une quelconque des revendications précédentes,
**caractérisé en ce que**
on l'exécute totalement dans une unité d'évaluation d'un ou de plusieurs capteurs (10, 12).

16. Programme d'ordinateur avec moyens de code de programme, pour exécuter les procédés selon l'une des revendications 1 à 15, lorsque le programme est exécuté sur un ordinateur.

17. Produit de programme d'ordinateur avec moyens de code de programme, qui sont mémorisés sur un support de données lisible par ordinateur pour exécuter le procédé selon l'une des revendications 1 à 15, lorsque le produit de programme d'ordinateur est exécuté sur un ordinateur.

18. Dispositif de génération d'un modèle d'une zone de surveillance (26) qui contient des points d'articles, sur la base de quantités d'éléments de données brutes correspondant à des points d'articles dans la zone de surveillance, comportant
au moins deux capteurs optoélectronique (10, 12), en particulier des scanners laser, dont les zones de visée (22, 24) renferment la zone de surveillance pour déterminer la position d'articles (28) détectés, destinés à détecter les quantités d'éléments de données brutes de l'un des capteurs (10, 12) respectifs lors d'un balayage de sa zone de visée (22, 24), les quantités d'éléments de données brutes étant associées à un capteurs (10, 12) respectifs, les quantités d'éléments de données brutes de différents capteurs (10, 12) formant un groupe avec une affectation temporelle réciproque déterminée, et les éléments de données brutes des quantités comprenant au moins les coordonnées de points d'articles détectés par le capteur (10, 12) associé, respectivement en rapport avec la position du capteur (10, 12) détectant,
un dispositif de traitement de données (20) pour mettre à disposition des données corrigées, qui est réalisé pour la transformation des coordonnées contenues dans les éléments de données brutes en tenant compte de la position relative des capteurs (10, 12) respectifs dans un système de coordonnées commun pour former, pour chaque quantité du groupe, des quantités d'éléments de données corrigées correspondant aux quantités d'éléments de données brutes du groupe, et
des enchaînements de données (16, 18) pour transmettre les éléments de données brutes détectés par les capteurs (10, 12) au dispositif de traitement de données (20),
pour chaque quantité d'éléments de données brutes du groupe, on effectue, avant la formation de la quantité corrigée correspondante, une reconnaissance et une poursuite d'objet sur la base des éléments de données brutes de la quantité, et des données de mouvement calculées lors de la poursuite de l'objet étant associées à chaque objet reconnu et à chacun de ces éléments de données brutes, et
en ce que lors de la formation des quantités corrigées, on utilise, pour la correction, des résultats de la reconnaissance et de la poursuite d'objet sur la base des quantités individuelles.

19. Dispositif selon la revendication 18,
**caractérisé en ce que**
les capteurs optoélectroniques (10, 12) présentent chacun un dispositif d'évaluation pour la reconnaissance et/ou la poursuite d'objets et l'émission de données d'objets correspondantes, et
**en ce que** les enchaînements de données (16, 18) sont conçus pour transmettre les données d'objets au dispositif de traitement de données (20).
